Europäisches Patentamt

(19) European Patent Office

Office européen des brevets

(11) Numéro de publication : **0 299 811 B1**

(12)　　　　　　　　**FASCICULE DE BREVET EUROPEEN**

(45) Date de publication du fascicule du brevet :
16.10.91 Bulletin 91/42

(51) Int. Cl.⁵ : **H02G 3/00, H01R 25/16**

(21) Numéro de dépôt : **88401388.9**

(22) Date de dépôt : **08.06.88**

(54) Canalisation électrique préfabriquée pour la réalisation de circuits de distribution électrique pouvant incorporer des zones de distribution commandables à conformations variables.

(30) Priorité : **08.07.87 FR 8709675**

(43) Date de publication de la demande :
**18.01.89 Bulletin 89/03**

(45) Mention de la délivrance du brevet :
**16.10.91 Bulletin 91/42**

(84) Etats contractants désignés :
**BE DE ES GB IT NL SE**

(56) Documents cités :
**EP-A- 0 077 242**
**EP-A- 0 174 733**
**FR-A- 2 514 576**
**US-A- 4 367 417**

(73) Titulaire : **TELEMECANIQUE**
**43-45, Boulevard Franklin Roosevelt**
**F-92504 Rueil-Malmaison Cedex (FR)**

(72) Inventeur : **De Oliveira, David**
**15, rue Lafayette**
**F-21000 Dijon (FR)**

(74) Mandataire : **Marquer, Francis et al**
**Cabinet Moutard 35, Avenue Victor Hugo**
**F-78960 Voisins le Bretonneux (FR)**

## Description

La présente invention concerne une canalisation électrique préfabriquée pour la réalisation de circuits de distribution électrique pouvant inclure notamment pour l'alimentation simultanée d'appareils d'utilisation situés en des emplacements différents, des zones de distribution commandables pouvant être créées, modifiées ou supprimées au gré de l'utilisateur.

D'une manière générale, on sait que les circuits électriques utilisés pour l'éclairage de locaux industriels ou du domaine tertiaire sont de plus en plus fréquemment réalisés à l'aide de canalisations électriques préfabriquées comportant une goulotte métallique dont le corps constitue la masse et dans laquelle des conducteurs de phase et, éventuellement un neutre et un conducteur de protection spécialisé, sont maintenus par des unités de positionnement en matière isolante qui définissent la position latérale de chacun d'eux.

Ces canalisations électriques comprennent par ailleurs, de place en place, des aires de connexion au niveau de chacune desquelles la goulotte comprend une fenêtre donnant accès à des portions préalablement dénudées des conducteurs. Habituellement, ces fenêtres sont disposées au droit des unités de positionnement qui sont alors elles-mêmes munies de fentes d'accès aux conducteurs et ce, à raison d'au moins une fente par conducteur.

Ces aires de connexion servent à recevoir des connecteurs comportant des organes de connexion aptes à s'engager dans la goulotte grâce à la susdite fenêtre et/ou les susdites fentes, et à établir un contact électrique avec un conducteur de phase ou de neutre correspondant.

Ces organes de connexion sont par ailleurs reliés aux conducteurs de branchement habituellement souples qui assurent la liaison électrique entre le connecteur et les appareils d'utilisation.

Ces connecteurs peuvent par exemple consister en celui qui se trouve décrit dans le brevet français FR-A-2514574, déposé le 9 Octobre 1981 au nom de la Demanderesse, dans lequel les organes de connexion, en nombre égal à celui des conducteurs de branchement, sont fixés à demeure à un boîtier isolant surmoulé, en des emplacements correspondant à la position des conducteurs de phase et/ou de neutre de la canalisation.

De même, lorsqu'il est souhaitable d'effectuer des sélections de phase, ces connecteurs peuvent comprendre des organes de connexion déplaçables de manière à pouvoir occuper plusieurs positions correspondant chacune à un conducteur différent de la canalisation. Ainsi, ces organes de connexion peuvent être conçus de manière à pouvoir coopérer, comme décrit dans le brevet français FR-A-2514576, déposé le 13 Octobre 1981 au nom de la Demanderesse, avec des réceptacles correspondant chacun à un conducteur de la canalisation.

Pour effectuer la sélection de phase, il suffira donc simplement d'engager les organes de connexion dans les réceptacles correspondant aux conducteurs choisis de la canalisation.

Il s'avère que jusqu'ici, les canalisations électriques précédemment décrites n'assuraient qu'une fonction de distribution de courant, les éléments de commande des appareils d'utilisation devant être prévus dans les circuits électriques reliant chacun de ces appareils au connecteur de branchement sur la canalisation qui lui correspond. Compte tenu du fait que ces éléments de commande sont rarement disposés à proximité des appareils d'utilisation qui leurs sont associés, il est donc le plus souvent nécessaire de réaliser une circuiterie conventionnelle qui réduit considérablement l'intérêt des canalisations préfabriquées.

Cet inconvénient se manifeste plus particulièrement dans le cas d'installations électriques, dans le cas de locaux dits "à géométrie variable" dans lesquels les pièces sont délimitées par des cloisons amovibles que l'utilisateur peut déplacer en fonction de ses besoins.

Dans ce cas, à chaque modification de forme ou de disposition de pièces, il devient souvent nécessaire de refaire les circuiteries raccordées aux canalisations préfabriquées qui sont en principe fixées à demeure sur les parties fixes du local.

Un même inconvénient de ces canalisations électriques préfabriquées utilisées jusqu'ici se manifeste dans le cas de la distribution et de la commande par zone d'appareils d'utilisation.

En effet, dans ce type d'application, chaque zone fera également intervenir une circuiterie conventionnelle incluant ses propres moyens de commande et reliée à la canalisation préfabriquée par l'intermédiaire d'un connecteur.

L'invention a donc plus particulièrement pour but de supprimer ces inconvénients en réduisant au strict minimum la circuiterie conventionnelle associée à la canalisation pour l'alimentation et la commande, aussi bien individuelles que par zones, d'appareils d'utilisation.

Elle se propose de parvenir à ces résultats sans modification structurale importante de la canalisation préfabriquée, de manière à pouvoir utiliser les mêmes composants que ceux des canalisations actuelles et les connecteurs actuellement sur le marché.

Ainsi, la canalisation électrique préfabriquée selon l'invention se compose d'une goulotte tubulaire contenant une pluralité de conducteurs électriques et comprenant en regard d'au moins une portion dénudée de ces conducteurs, une aire de connexion incluant au moins une fenêtre au travers de laquelle peuvent passer les organes de connexion d'un connecteur, ladite goulotte renfermant en outre au moins une unité de positionnement en matière isolante qui comporte, pour chacun desdits conducteurs, un moyen de positionnement correspondant conçu de manière à ce que la position des portions dénudées des conducteurs situées au droit de la fenêtre corresponde à l'implantation des organes de connexion dudit connecteur.

Selon l'invention, cette canalisation est plus particulièrement caractérisée en ce qu'elle comprend, en plus du nombre n de conducteurs prévus pour assurer l'alimentation en courant électrique des appareils d'utilisation, au moins un conducteur supplémentaire qui présente également, au niveau d'au moins une aire de connexion spécialisée, une portion dénudée sectionnée en deux tronçons positionnés de manière à occuper deux emplacements respectifs qui correspondent aux emplacements de deux organes de connexion respectifs d'un connecteur prévu pour une canalisation comportant un nombre n + 2 de conducteurs.

Il apparaît clairement que dans une canalisation électrique de ce type comprenant plusieurs aires de connexion spécialisées, le conducteur supplémentaire sera donc divisé en plusieurs segments indépendants les uns des autres et qui pourront donc constituer des segments conducteurs de zone pour l'alimentation simultanée d'une pluralité d'appareils d'utilisation.

Ainsi, en utilisant des connecteurs présentant des organes de connexion convenablement implantés, il sera possible :

— de relier tout ou partie de ces segments conducteurs de zone à un conducteur de phase ou de neutre de la canalisation et ce, directement ou par l'intermédiaire d'un dispositif interrupteur de commande de zone ;

— de connecter entre chacun des segments conducteurs de zone et un conducteur de phase ou de neutre de la canalisation, un ou plusieurs circuits d'utilisation pouvant chacun inclure un ou plusieurs appareils ;

— de connecter ensemble plusieurs segments conducteurs de zone de manière à obtenir une zone de distribution aux dimensions requises ; et

— de modifier la longueur et/ou l'emplacement des zones de distribution le long de la canalisation.

Bien entendu, l'invention concerne les circuits associés à la canalisation et, en particulier, les circuits de base permettant d'obtenir les résultats précédemment mentionnés.

Des modes d'exécution de l'invention seront décrits ci-après, à titre d'exemples non limitatifs, avec référence aux dessins annexés dans lesquels :

La figure 1 est une vue en perspective schématique d'un tronçon de canalisation électrique préfabriquée selon l'invention, comprenant une aire de connexion spécialisée ;

La figure 2 est une vue de dessus d'un connecteur utilisable sur la canalisation de la figure 1, avec indication de l'emplacement des organes de connexion, des conducteurs de la canalisation et des conducteurs d'utilisation ;

La figure 3 est une vue de bout du connecteur représenté figure 2 muni de deux organes de connexion sur les quatre possibles ;

Les figures 4 et 5 représentent le connecteur de la figure 3 en vue de dessous (figure 4) et en élévation latérale, avec coupe partielle (figure 5) ; et

La figure 6 est un schéma synoptique d'un circuit électrique utilisant une canalisation électrique selon l'invention.

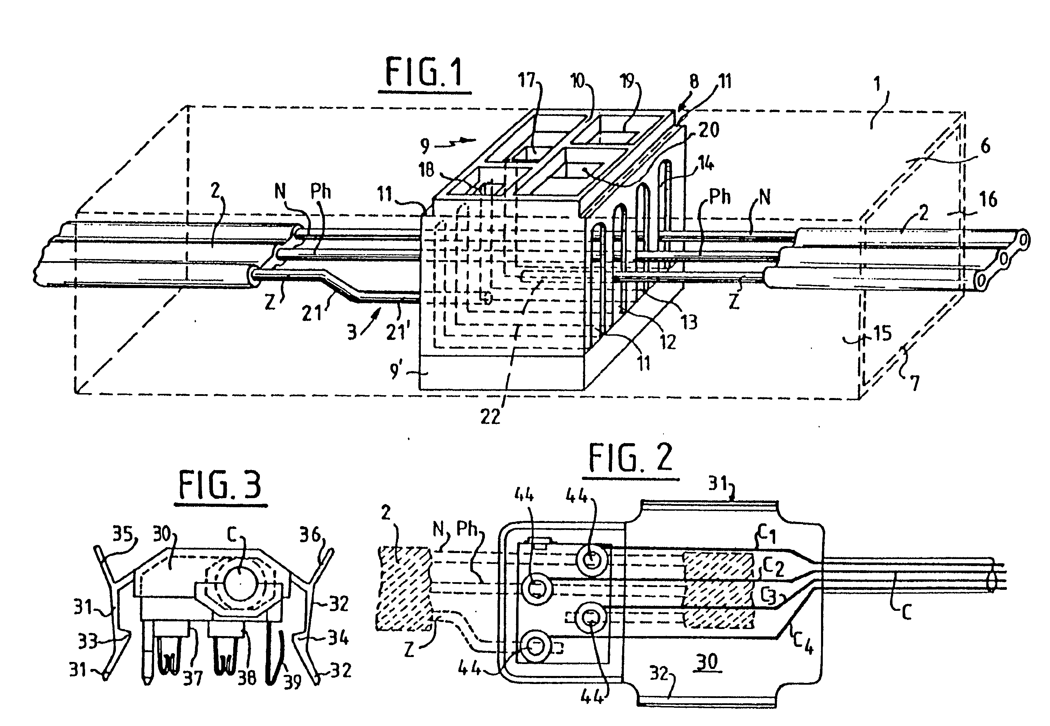

Dans l'exemple représente sur la figure 1, la goulotte 1 de la canalisation électrique a été schématisée, en traits interrompus, sous la forme simplifiée d'un élément tubulaire de section parallélépipédique, étant entendu qu'en réalité les canalisations usuelles présentent une forme profilée de section plus complexe qu'il n'est guère nécessaire de décrire dans le cadre de la présente demande.

Cette goulotte 1 est de préférence réalisée en matière électriquement conductrice, par exemple en tôle d'acier galvanisé, de manière à pouvoir elle-même servir de conducteur de terre. Elle renferme un faisceau plat 2 de conducteurs recouverts et solidarisés les uns aux autres par une matière plastique électriquement isolante.

Dans cet exemple, le faisceau 2 comprend trois conducteurs relativement rigides, à savoir :

— un conducteur de phase Ph,

— un conducteur de neutre N, et

— un conducteur de zone Z dont la fonction et des modes d'utilisation seront décrits dans la suite de la description.

Dans la partie centrale de ce tronçon de canalisation, qui correspond à l'une des susdites aires de connexion spécialisées, le faisceau 2 comprend une portion dénudée 3 laissant apparaître à nu les conducteurs Ph, N, Z qui s'étendent parallèlement les uns aux autres dans un plan sensiblement parallèle aux faces supérieure 6 et inférieure 7 de la goulotte 1.

Au droit de cette portion dénudée 3, la face supérieure 6 de la goulotte 1 présente une fenêtre rectangulaire 8 destinée à permettre l'accès à l'intérieur de la goulotte 1 à des organes de connexion.

Le positionnement des conducteurs Ph, N, Z à l'intérieur de la goulotte est assuré par une unité de positionnement 9 qui sert en outre, au positionnement, au guidage, au détrompage et à l'isolation des organes de connexion des connecteurs associés à la canalisation.

Dans cet exemple, l'unité de positionnement 9 se présente sous la forme d'un bloc sensiblement parallélépipédique en matière isolante, par exemple en matière plastique, dont la face supérieure 10, bordée d'une feuillure 11, vient s'engager dans la fenêtre 8 de la goulotte 1.

Ce bloc présente, dans sa partie inférieure, quatre fentes longitudinales 11, 12, 13, 14, parallèles aux côtés latéraux 15, 16 de la goulotte 1 et présentant un entraxe sensiblement égal à celui des conducteurs N, Ph, Z. Ces fentes 11 à 14 sont refermées par un fond 9' monté sur la face inférieure du bloc.

Par ailleurs, la face supérieure du bloc comprend quatre perçages 17 à 20 communiquant respectivement avec les quatre fentes 11 à 14 et présentant chacun une section sensiblement égale à la section d'un organe de connexion d'un connecteur.

Dans cet exemple, les perçages 17 à 20 sont disposés en quinconce et forment deux rangées de deux perçages 17, 18-19, 20 perpendiculaires aux côtés latéraux 15, 16 de la goulotte 1.

Cette disposition des perçages correspond en effet à la disposition des emplacements des organes de connexion dans les connecteurs représentés sur les figures 2 à 5 (les perçages 17 à 20 servant à permetre aux organes de connexion l'accès aux conducteurs N, Ph, Z).

On remarquera que contrairement à un usage classique, on utilise ici, pour un faisceau à trois conducteurs Ph, N, Z, une unité de positionnement servant habituellement à un faisceau à quatre conducteurs, et des connecteurs pouvant comprendre quatre organes de connexion.

En effet, selon l'invention et comme on peut le voir sur la figure 1, le conducteur de zone Z est sectionné dans sa partie dénudée et présente, de ce fait, deux portions d'extrémité 21, 22, dont l'une 22 s'engage directement dans la fente 12, tandis que l'autre a été préalablement coudée de manière à présenter une portion extrême 21' qui s'étend parallèlement à l'axe longitudinal de la canalisation, à une distance correspondant à l'entraxe des conducteurs N, Ph, de sorte que cette portion extrême 21' s'engage dans la fente supplémentaire 11 du bloc.

Cette particularité constituant la seule différence existant entre la canalisation électrique selon l'invention et les canalisations existantes de ce type, on conçoit aisément qu'il est possible d'utiliser dans les deux cas les mêmes composants et, en particulier, les mêmes connecteurs.

Ces connecteurs peuvent donc par exemple consister en ceux qui se trouvent représentés dans le brevet français FR-A-2514574 précité ou ceux qui figurent dans le brevet français FR-A-2514576 qui seront décrits ci-après en référence aux figures 2 à 5.

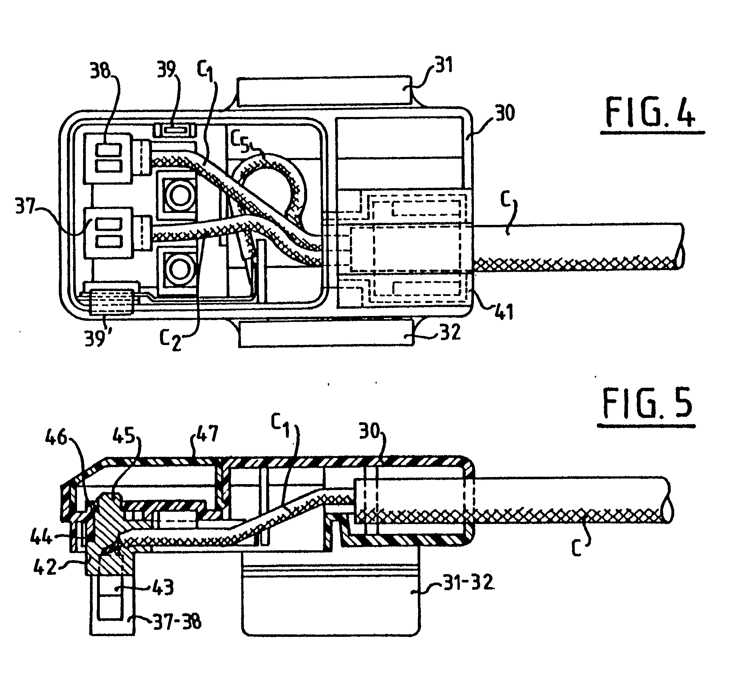

Le connecteur représenté sur ces figures comprend un boîtier 30 en matière isolante dont la face intérieure est visible à la figure 4, et la face extérieure est visible à la figure 2.

Ce boîtier se fixe sur la canalisation électrique au moyen de pattes 31-32 formant griffes (figure 3) muni d'ergots d'accrochage 33-34 qui viennent s'engager dans un profil complémentaire à celui des griffes, prévu sur la goulotte (non figurée). Deux ailes supérieures 35-36 (figures 2 et 4) permettent de saisir le boîtier pour le dégager de la goulotte.

Dans cet exemple, le connecteur est conçu pour une canalisation à quatre conducteurs (en principe pour un circuit triphasé) et présente donc une structure apte à coopérer avec l'aire de connexion de la canalisation représentée sur la figure 1. Ce connecteur est prévu de manière à pouvoir recevoir quatre organes de connexion amovibles dont deux seulement 37-38 ont été représentés sur les figures 3 à 5.

Ce connecteur comprend en outre un organe de connexion fixe 39 à la masse constitué par une lame métallique élastique 39' pliée, fixée dans le boîtier et à laquelle est soudé un conducteur souple $C_5$ (figure 4) du câble C branché sur l'appareil d'utilisation.

Le boîtier 30 est encore muni d'un ergot 39 en matière isolante, de même longueur que la lame 39', mais de largeur différente et décalé longitudinalement par rapport à elle (voir figure 4). Cet ergot 39, ainsi que la lame 39', sont destinés à pénétrer dans des fentes ménagées dans la canalisation et leur position fait détrompage, c'est-à-dire que le connecteur ne pourra être mis en place que dans un seul sens.

On voit, sur la figure 4, que le câble C pénètre dans le boîtier 30 et est maintenu par un capot 41 et que les deux conducteurs de phase $C_1$-$C_2$ aboutissent respectivement aux organes de connexion 37 et 38.

Ces derniers comportent un support isolant, tel que 42, visible à la figure 5, surmoulé sur une pince de contact 43 qui s'engage dans un réceptacle, tel que 44, figure 5, formé à l'intérieur du boîtier 30. La forme de ce réceptacle et celle du corps principal du support 42 sont agencées pour que les lames de la pince 43 se présentent dans des plans perpendiculaires au boîtier 30 et la position des réceptacles est telle que, les supports une fois engagés, les lames des pinces se présenteront en face des perçages 17-20 de l'unité de positionnement situés au droit des conducteurs de phase de la canalisation.

Le corps principal de chaque support est prolongé par un téton 45 (figure 5) qui s'engage dans un orifice correspondant 46, ménagé dans une paroi extérieure principale du boîtier 30. Cette paroi est en retrait par rapport à la face extérieure principale du boîtier et recouverte d'un capot transparent 47 qui permet de voir, depuis l'extérieur, les tétons des organes de connexion mis en place dans les réceptacles.

On voit finalement que l'on peut sélecter les conducteurs sur lesquels on veut effectuer une connexion électrique simplement en engageant les organes de connexion 37, 38, 37', 38' dans les réceptacles 44 appropriés. Le résultat de cette sélection est visualisé à l'extérieur par les positions des tétons 45 engagés.

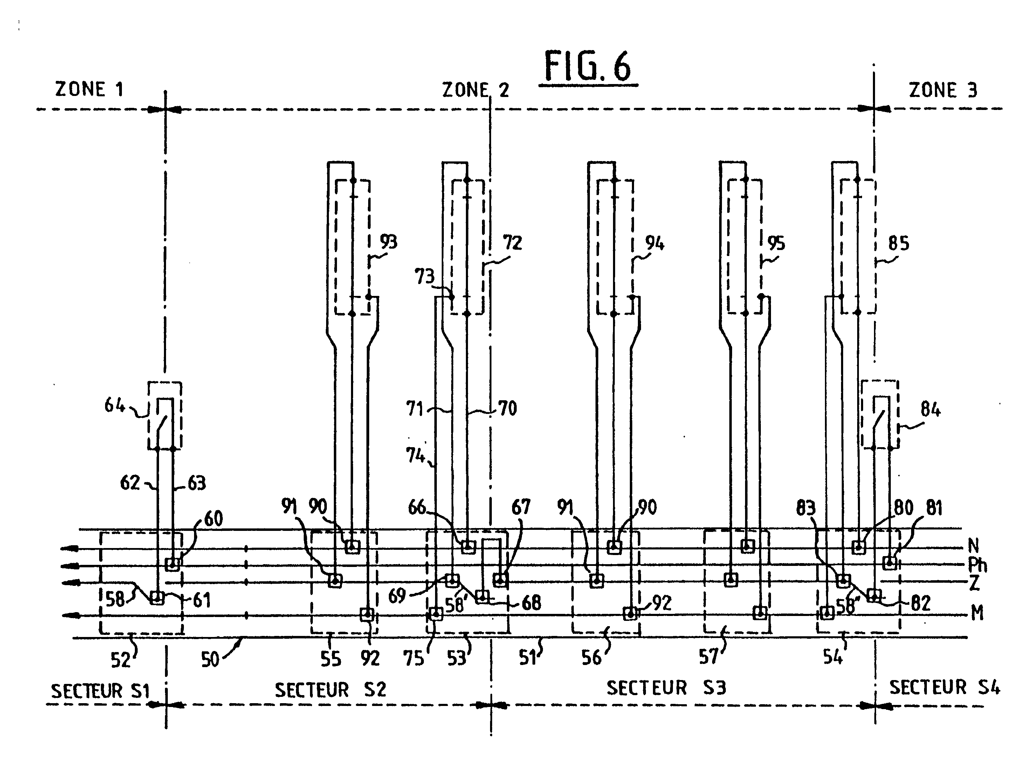

Bien entendu, l'invention ne se limite pas aux connecteurs précédemment décrits. Toutefois, grâce aux multiples possibilités de sélection qu'ils présentent, ces connecteurs conviennent particulièrement bien à la réalisation des nombreux circuits électriques autorisés par la canalisation selon l'invention, et dont un exemple est illustré figure 6.

Sur cette figure, la canalisation électrique 50 représentée sous une forme schématique contractée comprend, à l'intérieur d'une goulotte 51 qui sert de conducteur de masse M (représenté séparément pour plus de clarté), trois conducteurs pouvant faire partie d'un faisceau tel que celui représenté sur la figure 1, à savoir : un conducteur de neutre N, un conducteur de phase Ph et un conducteur de zone Z.

Cette canalisation comprend, par ailleurs, une pluralité d'aires de connexion de deux types différents, à savoir :
— un premier ensemble d'aires de connexion spécialisées, du type de celle représentée sur la figure 1 qui comprend les aires de connexion 52, 53, 54 ; et
— un second ensemble d'aires de connexion de type connu qui comprend les aires de connexion 55, 56, 57.

Comme on peut le voir sur cette figure, dans les aires de connexion du premier type, le conducteur de zone Z est sectionné et présente une portion extrême coudée 58, 58', 58", de la façon précédemment décrite. Ce conducteur de zone Z est donc divisé en plusieurs secteurs, à savoir les secteurs $S_1$, $S_2$, $S_3$ et $S_4$.

Les connecteurs utilisables sur ces aires de connexion peuvent consister en ceux précédemment décrits, dans lesquels les organes de connexion ont été convenablement sélectionnés en fonction des circuits à réaliser.

Ainsi, dans cet exemple, le connecteur affecté à l'aire de connexion 52 comprend deux organes de connexion 60, 61 destinés à s'engager respectivement sur le conducteur de phase Ph et sur la portion extrême déportée 58 du conducteur de zone Z. Les deux conducteurs d'utilisation 62, 63 connectés aux organes de connexion 60, 61 sont reliés à un interrupteur 64 qui, de ce fait, commande l'alimentation du secteur $S_1$ du conducteur de zone Z. Ainsi, sur la partie de la canalisation correspondant à ce secteur $S_1$, il sera possible de connecter entre le neutre N et le conducteur de zone Z divers appareils d'utilisation commandés simultanément par l'interrupteur 64 dans une première zone (zone 1) partiellement représentée.

Le connecteur affecté à l'aire de connexion 53 comprend, quant à lui, quatre organes de connexion 66, 67, 68, 69 respectivement affectés au conducteur de neutre N, et aux deux portions extrêmes du conducteur de zone Z présentes dans cette aire de connexion. Dans ce cas, les organes de connexion 67 et 68 sont électriquement reliés l'un à l'autre, par exemple au moyen d'une liaison électrique interne au connecteur, tandis que les conducteurs d'utilisation 70, 71 associés aux organes de connexion 66, 69 sont reliés à un appareil d'utilisation 72 qui consiste ici en une rampe d'éclairage (tube fluo). La prise de terre 73 de cette rampe 72 est également reliée au conducteur de terre de la canalisation par un fil de terre 74, par l'intermédiaire du dispositif de prise de terre 75 du connecteur précédemment décrit.

Ainsi, le connecteur de l'aire 53 assure une double fonction. Il assure le rôle de prolongateur de zone par couplage des segments $S_2$ et $S_3$, et il permet la connexion d'un appareil d'utilisation 72 appartenant à la zone 2 ainsi prolongée.

Le connecteur affecté à l'aire de connexion 54 comprend également quatre organes de connexion 80, 81, 82, 83 implantés de la même façon. Toutefois, dans ce cas, l'organe de connexion 82 affecté à la portion extrême 58" du conducteur de zone Z et l'organe de connexion 81 affecté au conducteur de phase Ph sont connectés à un interrupteur 84 qui commande alors l'alimentation de la zone 2 formée par l'interconnexion des secteurs $S_2$ et $S_3$, tandis que les organes de connexion 80, 83 sont reliés à un appareil d'utilisation 85 (également un tube fluo) d'une façon analogue à celle précédemment décrite.

Les aires de connexion 55, 56, 57 présentes sur les secteurs $S_2$, $S_3$, entre les aires de connexion 52 et 54 précédemment décrites, sont équipées de connecteurs comprenant chacun, outre une prise de terre 92, un organe de connexion 90 branché sur le connecteur de neutre N et un organe de connexion 91 branché sur le connecteur de zone Z.

Ces connecteurs sont chacun reliés à un appareil d'utilisation respectif (tubes fluo 93, 94, 95).

Ainsi, dans la zone 2 tous les appareils d'utilisation (tubes fluo 72, 85, 93, 94, 95) sont commandés par un même interrupteur 84.

Bien entendu, chacun des secteurs de la canalisation électrique pourrait en outre comprendre des aires de connexion de type usuel servant à recevoir des connecteurs munis de deux organes de connexion respectivement branchés sur le conducteur de neutre et sur le conducteur de phase. Ces connecteurs pourraient alors être reliés à des appareils d'utilisation par l'intermédiaire de dispositifs interrupteurs.

Comme précédemment mentionné, un avantage important de la canalisation électrique selon l'invention consiste en ce qu'elle permet de réduire au strict minimum les câbleries conventionnelles et qu'elle permet d'effectuer, par de simples connexions au niveau des connecteurs, des modifications d'emplacement et de longueur des zones commandées.

Cet avantage peut être considérablement accru dans le cas où l'on utilise pour la commande des zones des dispositifs interrupteurs à commande à distance sans fil tels que, par exemple, des dispositifs à ondes électromagnétiques, à rayonnement infrarouge ou ultrasonore.

## Revendications

1. Canalisation électrique préfabriquée pour la réalisation de circuits de distribution électrique pouvant incorporer des zones de distribution commandables à conformations variables, cette canalisation comprenant de façon classique une goulotte tubulaire (1) dans laquelle des conducteurs (2) tels que des conducteurs de phase (Ph) et de neutre (N) s'étendent longitudinalement et sont maintenus par des unités de positionnement (9), ainsi que, de place en place, des aires de connexion au niveau de chacune desquelles la goulotte comprend au moins un orifice (8) donnant accès à des portions dénudées (3) des conducteurs, ces aires de connexion servant à recevoir des connecteurs munis d'organes de connexion aptes à venir s'engager dans la goulotte par ledit orifice et à établir un contact électrique avec un conducteur correspondant,
caractérisée en ce qu'en plus du nombre n de conducteurs prévus pour assurer l'alimentation en courant électrique des appareils d'alimentation, elle comprend au moins un conducteur supplémentaire (Z) qui présente, au niveau d'au moins une aire de connexion spécialisée, une portion dénudée (3) sectionnée en deux tronçons (21, 22) positionnés de manière à occuper deux emplacements respectifs qui correspondent respectivement aux emplacements de deux organes de connexion (37, 38) d'un connecteur prévu pour une canalisation comportant un nombre n + 2 de conducteurs.

2. Canalisation électrique selon la revendication 1, caractérisée en ce que le susdit connecteur affecté à l'aire de connexion spécialisée comprend un boîtier (30) sur lequel les organes de connexion (37, 38) sont fixés à demeure.

3. Canalisation électrique selon la revendication 1, caractérisée en ce que le susdit connecteur comprend des organes de connexion (37, 38) déplaçables de manière à pouvoir occuper plusieurs positions correspondant chacune à un conducteur différent (N, Ph, Z) de la canalisation.

4. Canalisation selon l'une des revendications précédentes,
caractérisée en ce que, dans la susdite aire de connexion spécialisée (52), l'un au moins des deux susdits tronçons (58) est connecté à un autre conducteur (Ph) de la canalisation par l'intermédiaire d'un interrupteur (64) monté dans le circuit associé à un connecteur venant se brancher sur ladite aire de connexion (52), cet interrupteur (64) assurant alors la commande de l'alimentation d'une zone déterminée (zone $z_1$) de la canalisation.

5. Canalisation selon l'une des revendications 1 à 4, caractérisée en ce que, dans la susdite aire de connexion spécialisée (53), les deux tronçons du conducteur supplémentaire (Z) sont connectés l'un à l'autre par l'intermédiaire d'un circuit de liaison associé à un connecteur venant se brancher sur ladite aire de connexion (53), de manière à effectuer un prolongement de zone.

6. Canalisation selon l'une des revendications précédentes,
caractérisée en ce qu'elle comprend des aires de connexion spécialisées (52, 53, 54) et des aires de connexion conventionnelles (55, 56, 57) dans lesquelles le susdit conducteur supplémentaire (Z) n'est pas sectionné.

7. Canalisation selon l'une des revendications précédentes,
caractérisée en ce qu'elle comprend dans les susdites aires de connexion des unités de positionnement (9) qui servent à assurer à la fois le positionnement des conducteurs de la canalisation et à la fois le positionnement, le guidage, le détrompage et l'isolation électrique des organes de connexion des susdits connecteurs.

## Patentansprüche

1. Vorgefertigte Stromzuleitung zur Realisierung von elektrischen Verteilungsschaltungen, die steuerbare Verteilungszonen mit verstellbaren Konfigurationen umfassen kann, wobei besagte Stromzuleitung nach herkömmlicher Art eine rohrförmige Wanne (1) aufweist, in der sich Leiter (2), wie Phasenleiter (Ph) und Nulleiter (N) in Längsrichtung erstrecken und durch Positioniereinheiten (9) festgehalten werden, sowie, in Abständen, Anschlussbereiche, in deren Höhe die Wanne jedesmal mit einer Zugangsöffnung (8) zu entblössten Abschnitten (3) der Leiter versehen ist und besagte Anschlussbereiche Anschlüsse aufnehmen können, welche mit Anschlussorganen versehen sind, die durch besagte Öffnung in die Wanne eindringen und mit einem entsprechenden Leiter einen elektrischen Kontakt herstellen können, dadurch gekennzeichnet, dass sie ausser der Anzahl n von Leitern, welche die Versorgungsapparate mit elektrischem Strom speisen, mindestens einen zusätzlichen Leiter (Z) aufweist, der in Höhe von mindestens einem spezialisierten Anschlussbereich einen entblössten Abschnitt (3) aufweist, welcher in zwei Teile (21, 22) geteilt ist, die so angeordnet sind, dass sie zwei Plätze einnehmen, die jeweils den Plätzen von zwei Anschlussorganen (37, 38) eines für eine Stromzuleitung mit n + 2 Leitern vorgesehenen Anschlusses entsprechen.

2. Elektrische Stromzuleitung nach Anspruch 1, dadurch gekennzeichnet, dass besagter, für den spezialisierten Anschlussbereich vorgesehener Anschluss ein Gehäuse (30) aufweist, auf dem die Anschlussorgane (37, 38) auf Dauer befestigt sind.

3. Elektrische Stromzuleitung nach Anspruch 1, dadurch gekennzeichnet, dass besagter Anschluss verschiebbare Anschlussorgane (37, 38) aufweist, die mehrere Positionen einnehmen können, welche jeweils einem der verschiedenen Leiter (N, Ph, Z) der Stromzuleitung entsprechen.

4. Stromzuleitung nach einem der vorhergehenden Ansprüche, dadurch gekennzeichnet, dass in besagtem spezialisiertem Anschlussbereich (52) mindestens eine der Längen (58) an einen anderen Leiter (Ph) der Stromzuleitung angeschlossen ist, durch einen Schalter (64), welcher in einem Schaltkreis angeordnet ist, der seinerseits einem an besagten Anschlussbereich (53) angeschlossenem Anschluss zugeordnet ist, wobei besagter Schalter (64) dann die Versorgung einer bestimmten Zone (Zone $z_1$) der Stromzuleitung steuert.

5. Stromzuleitung nach einem der Ansprüche 1 bis 4, dadurch gekennzeichnet, dass in besagtem spezialisiertem Anschlussbereich (53) die beiden Längen des zusätzlichen Leiters (Z) durch einen Anschlusskreis, der einem an besagten Anschlussbereich (53) angeschlossenem Anschluss zugeordnet ist aneinandergeschlossen sind, um so eine Zonenverlängerung vorzunehmen.

6. Stromzuleitung nach einem der vorhergehenden Ansprüche, dadurch gekennzeichnet, dass sie spezaialisierte Anschlussbereiche (52, 53, 54) und traditionelle Anschlussbereiche (55, 56, 57) aufweist, in denen der besagte zusätzliche Leiter (Z) nicht geteilt ist.

7. Stromzuleitung nach einem der vorhergehenden Ansprüche, dadurch gekennzeichnet, dass sie in besagten Anschlussbereichen Positioniereinheiten (9) aufweist, die zugleich die Leiter der Stromzuleitung positionieren und zur unverwechselbaren Montage, zur Positionierung, Führung und elektrischen Isolation der Anschlussorgane der besagten Anschlüsse dienen.

**Claims**

1. Prefabricated electrical feedline for implementing electrical distribution circuits which may comprise controllable distribution zones with variable conformations, said feedline comprising, in a conventional way, a tubular trough (1) in which conductors (2), such as phase conductors (Ph) and neutral conductors (N) extend longitudinally and are held in place by positioning units (9) as well as, at intervals, connection areas at the level of which the trough comprises at least one orifice (8) for acceding to bared portions (3) of the connectors, said connection areas receiving connectors which are provided with connecting parts adapted for engagement in the trough though said orifice and for establishing an electrical contact with the corresponding conductor, characterized in that, further to the number n of conductors provided for feeding electrical current to supply apparatus, it comprises at least one further conductor (Z) which has, at the level of at least one specialized connection area, a bared portion (3) cut into two lengths, (21, 22), positioned so as to occupy two respective locations which respectively correspond to the location of two connecting parts (37, 38) of a connector provided for a feedline with n + 2 conductors.

2. Electrical feedline according to claim 1, characterized in that said connector assigned to the specialized connection area comprises a casing (30) to which the connecting parts (37, 38) are permanently fixed.

3. Electrical feedline according to claim 1, characterized in that said connector comprises connecting parts (37, 38) which may be moved so as to occupy several positions, each corresponding to a different conductor (N, Ph, Z) of the feedline.

4. Feedline acccording to one of the preceding claims, characterized in that, in said specialized connection area (52), at least one of the said lengths (58) is connected to another conductor (Ph) of the feedline, by means of a switch (64) mounted in the circuit which is associated with a connector connected to said connection area (52), said switch (64) then controlling the supply of a predetermined zone (zone $z_1$) of the feedline.

5. Feedline according to one of claims 1 to 4, characterized in that, in said specialized connection area (53), the two lengths of the supplemental conductor (Z) are interconnected by means of a connection circuit, associated with a connector which is connected to said connection area (53) so as to achieve a zone extension.

6. Feedline according to one of the preceding claims, characterized in that it comprises specialized connection areas (52, 53, 54) and conventional connection areas (55, 56, 57) in which said supplemental conductor (Z) is not cut.

7. Feedline according to one of the preceding claims, characterized in that it comprises, in said connection areas, positioning units (9) which both provide positioning of the conductors of the feedline and positioning, guiding, foolproof mounting and electrical insulation of the connecting parts of said connectors.

FIG.1

FIG.2

FIG.3

FIG.4

FIG.5

# FIG. 6

ZONE 1　　　　　　　　　　ZONE 2　　　　　　　　　　ZONE 3

SECTEUR S1　　SECTEUR S2　　　　SECTEUR S3　　　　SECTEUR S4

EP 0 299 811 B1